# EUROPEAN PATENT APPLICATION

(11) **EP 1 363 218 A1**
(43) Date of publication of application: **19.11.2003**
(21) Application number: 03008867.8
(22) Date of filing: 29.04.2003
(51) Int. Cl.: G06F 17/60, G03G 15/00

(54) **System, apparatus, and method for generating and providing information on customer apparatuses**

(30) Priority: 16.05.2002 JP 2002141633
(71) Applicant: Ricoh Company, Ltd., Tokyo 143-8555 (JP)
(72) Inventor: Saitoh, Minoru, Yokohama-shi, Kanagawa (JP); Shimizu, Toshiyuki, Yokohama-shi, Kanagawa (JP); Fukui, Tatsushi, Kiwasaki-shi, Kanagawa (JP); Hori, Kenji, Nishitokyo-shi, Tokyo (JP); Komori, Shigenori, Suginami-ku, Tokyo (JP); Yamazaki, Shoichi, Yokohama-shi, Kanagawa (JP); Kaiya, Naohide, Yokohama-shi, Kanagawa (JP)
(74) Representative: Schwabe - Sandmair - Marx

(57) **Abstract**

An information service system includes an office apparatus provided to a customer, a service providing apparatus that provides service to the customer, and an information service apparatus that generates and provides information on the office apparatus. The information service apparatus includes a usage condition information part that collects and manages usage condition information that shows the condition of usage of the office apparatus, a service information part that collects and manages service information that shows the service provided to the customer by the service providing apparatus, and an information providing part that generates and provides the information on the office apparatus based on at least one of the usage condition information and the service information.

## Description

### BACKGROUND OF THE INVENTION

### 1. Field of the Invention

The present invention relates to a system, apparatus, and method for generating and providing information on office apparatuses provided to customers.

### 2. Description of the Related Art

A conventional system that monitors an apparatus provided to a remote customer and performs necessary processing is known. According to the conventional system, however, apparatus information is collected from a specific point of view so as to be used for limited purposes.

For instance, a conventional system that monitors the usage of a remote apparatus and charges for the usage is known. A conventional system that monitors information on the quality of a remote apparatus so as to monitor the condition of the apparatus is also known.

### SUMMARY OF THE INVENTION

However, in terms of supporting a customer, for instance, in terms of providing convenience directly to a customer using data on the apparatus of the customer, there is the problem that it is impossible to provided sufficient support to the customer only by obtaining information on the usage or the quality (usage information or quality information) of the apparatus.

For instance, the complete knowledge of the condition of the apparatus cannot be obtained only from the usage information or the quality information of the apparatus. The impossibility of obtaining the complete knowledge of the condition of the apparatus also means the impossibility of the complete maintenance and management of the apparatus, thus indicating incomplete support for the customer.

Further, in light of producing and selling an apparatus and providing service on the apparatus to the customer, there is also the problem that it is impossible to produce and sell the apparatus and provide service on the apparatus to the customer in response to the needs of the customer only with the usage information or the condition information of the apparatus.

For instance, there is the problem that it is impossible to produce and sell an apparatus and provide service on the apparatus in response to the improvement of the performance of office equipment or the networking of the office environment.

Further, there is the idea of maintaining an apparatus provided to the customer using the usage information and the quality information of the apparatus. It is impossible, however, to produce and sell an apparatus and provide service on the apparatus in accordance with the actual usage of the apparatus only with the usage information and the quality information of the apparatus provided to the customer.

Accordingly, it is a general object of the present invention to provide a system, apparatus, and method for generating and providing information on customer apparatuses in which the above-described disadvantages are eliminated.

A more specific object of the present invention is to provide a system, apparatus, and method that can provide information contributing to the accurate production of apparatuses, the sales promotion of apparatuses, and service to customers based on information according to the actual apparatus usage.

Another more specific object of the present invention is to provide a program for executing such a method and a recording medium storing such a program.

The above objects of the present invention are achieved by an information service system including: an office apparatus provided to a customer; a service providing apparatus that provides service to the customer; and an information service apparatus that generates and provides information on the office apparatus, the information service apparatus including: a usage condition information part that collects and manages usage condition information that shows a condition of usage of the office apparatus; a service information part that collects and manages service information that shows the service provided to the customer by the service providing apparatus; and an information providing part that generates- and provides the information on the office apparatus based on at least one of the usage condition information and the service information.

According to the above-described information service system, the information on the office apparatus is generated and provided based on at least one of the usage condition information and the service information. Therefore, the information contributing to the accurate production of apparatuses, the sales promotion of apparatuses, and service to customers can be provided based on the information according to the actual apparatus usage.

The above objects of the present invention are also achieved by an information service apparatus generating and providing information on an office apparatus provided to a customer, the information service apparatus including: a usage condition information part that collects and manages usage condition information that shows a condition of usage of the office apparatus; a service information part that collects and manages service information that shows service provided to the customer by a service providing apparatus; and an information providing part that generates and provides the information on the office apparatus based on at least one of the usage condition information and the service information.

According to the above-described information service apparatus, the information on the office apparatus is generated and provided based on at least one of the usage condition information and the service information. Therefore, the information contributing to the accurate production of apparatuses, the sales promotion of apparatuses, and service to customers can be provided based on the information according to the actual apparatus usage.

The above objects of the present invention are also achieved by a method of generating and providing information on an office apparatus provided to a customer, the method including the steps of: (a) collecting usage condition information that shows a condition of usage of the office apparatus; (b) collecting service information that shows service provided to the customer by a service providing apparatus; and (c) generating and providing the information on the office apparatus based on at least one of the usage condition information and the service information.

According to the above-described method, the information on the office apparatus is generated and provided based on at least one of the usage condition information and the service information. Therefore, the information contributing to the accurate production of apparatuses, the sales promotion of apparatuses, and service to customers can be provided based on the information according to the actual apparatus usage.

The above objects of the present invention are also achieved by a program for causing a computer to execute a method of generating and providing information on an office apparatus provided to a customer, the method including the steps of: (a) collecting usage condition information that shows a condition of usage of the office apparatus; (b) collecting service information that shows service provided to the customer by a service providing apparatus; and (c) generating and providing the information on the office apparatus based on at least one of the usage condition information and the service information.

The above objects of the present invention are further achieved by a computer-readable recording medium recording a program for causing a computer to execute a method of generating and providing information on an office apparatus provided to a customer, the method including the steps of: (a) collecting usage condition information that shows a condition of usage of the office apparatus; (b) collecting service information that-shows service provided to the customer by a service providing apparatus; and (c) generating and providing the information on the office apparatus based on at least one of the usage condition information and the service information.

### BRIEF DESCRIPTION OF THE DRAWINGS

Other objects, features and advantages of the present invention will become more apparent from the following detailed description when read in conjunction with the accompanying drawings, in which:
FIG. 1 is a block diagram for illustrating a system configuration according to an embodiment of the present invention;
FIG. 2 is a block diagram for illustrating a remote service center according to the embodiment of the present invention;
FIG. 3 is a block diagram for illustrating a system configuration of a service providing part according to the embodiment of the present invention;
FIG. 4 is a block diagram for illustrating an office apparatus used by a customer according to the embodiment of the present invention;
FIG. 5 is a diagram showing a sequence of operations for providing office apparatus information service according to the embodiment of the present invention; and
FIG. 6 is a block diagram for illustrating a system configuration where a component distributing part, a service part, and a sales part of the service providing part of FIG. 3 are provided separately as three systems according to the embodiment of the present invention.

### DETAILED DESCRIPTION OF THE PREFERRED EMBODIMENTS

A description will now be given, with reference to the accompanying drawings, of an embodiment of the present invention.

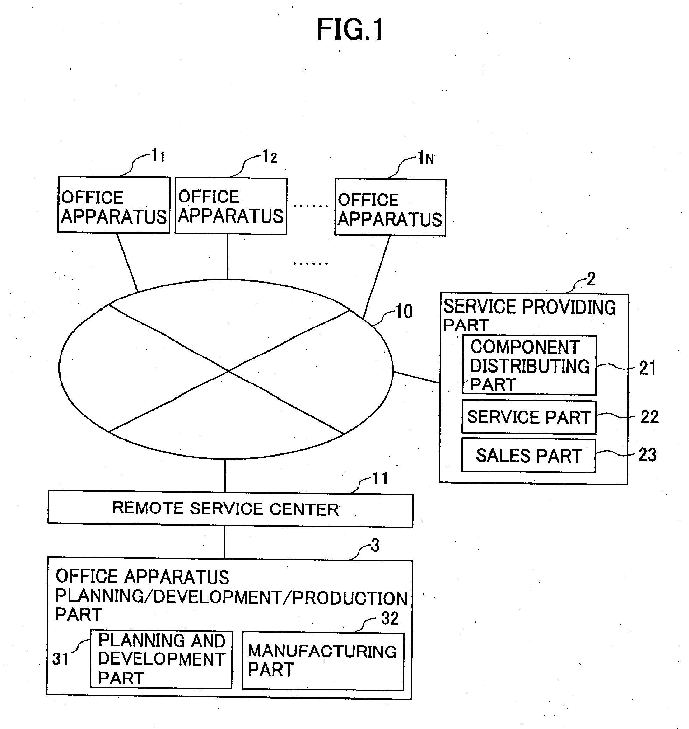

FIG. 1 is a block diagram showing a system configuration according to the embodiment of the present invention. The system of FIG. 1 includes office apparatuses 1₁ through 1_{N}, a service providing part 2, a remote service center (an office apparatus information service center or an office apparatus information service apparatus) 11, an office apparatus planning/development/production part 3, and a communication network 10.

The communication network 10 may be the Internet or a network for telephone and/or data communication including a public telephone network. In this embodiment, a description is given of the case of the Internet.

The office apparatuses 1₁ through 1_{N} are formed of apparatuses such as personal computers, printers, copiers, facsimile machines, and scanners. These apparatuses may be products of a plurality of manufacturers. The service providing part 2, which includes a component distributing part 21, a service part 22, and a sales part 23, is a system for delivering, changing, and collecting components for the office apparatuses 1₁ through 1_{N}, providing maintenance service for the office apparatuses 1₁ through 1_{N}, and selling office apparatuses (including consumables) to the customers having the office apparatuses 1₁ through 1_{N}.

The component distributing part 21 is a system for delivering, changing, and collecting components for the office apparatuses 1₁ through 1_{N} for the customers having the office apparatuses 1₁ through 1_{N}. The component distributing part 21 delivers consumables, changes consumables and units, and collects consumables. Most operations of the component distributing part 21 relate directly to the operations of a conventional maintenance and management service company. The component distributing part 21 may be provided separately from the service providing part 2 as an independent component distributing part (apparatus or system).

The service part 22 is a system for providing office apparatus maintenance service to the customers having the office apparatuses 1₁ through 1_{N}. The service part 22 makes maintenance contracts with the customers so as to maintain and manage the office systems of the customers. The service part 22 may be provided separately from the service providing part 2 as an independent service part (apparatus or system).

The sales part 23 is a system for selling office apparatuses to the customers having the office apparatuses 1₁ through 1_{N}. The sales part 23 sells products and consumables to the customers, provides consulting service to the customers for their office systems, and manages the customers' systems. The sales part 23 may be provided separately from the service providing part 2 as an independent sales part (apparatus or system).

The remote service center 11: (a) collects information-on the usage condition (usage condition information) of each of the office apparatuses 1₁ through 1_{N}; (b) collects information on service (service information) from the service providing part 2, the service being provided to the customers by the service providing part 2; (c) stores and manages the collected information in a storage medium; and (d) generates information on the office apparatuses 1₁ through 1_{N} (office apparatus information) based on at least one of the usage condition information and the service information, and provides the generated information to the service providing part 2 and the office apparatus planning/development/production part 3.

The usage condition information includes information on the usage (amount of usage) (usage information) of the office apparatuses 1₁ through 1_{N}, information on the supply of consumables (supply information) for the office apparatuses 1₁ through 1_{N}, and information on the quality (quality information) of the office apparatuses 1₁ through 1_{N}. The service information includes, for instance, information on the delivery, replacement, and collection (delivery/replacement/ collection information) of components for the office apparatuses 1₁ through 1_{N}, information on maintenance service (maintenance service information) for the office apparatuses 1₁ through 1_{N}, and information on the sales (sales information) of office apparatuses relating to the office apparatuses 1₁ through 1_{N}.

The office apparatus planning/development/production part 3, which includes a planning and development part 31 and a manufacturing part 32, is a system for planning, developing, and manufacturing office apparatuses. The office apparatus planning/development/production part 3 may be connected to the remote service center 11 via the communication network 10. Further, the planning and development part 31 and the manufacturing part 32 of the office apparatus planning/development/production part 3 may be individually connected directly or via the communication network 10 to the remote service center 11.

The remote service center 11 collects the usage condition information from the office apparatuses 1₁ through 1_{N}, and collects the delivery/replacement/collection information, the maintenance service information, and the sales information of the office apparatuses 1₁ through 1_{N} from the service providing part 2. Then, the remote service center 11 processes the collected information and provides the processed information to the service providing part 2 and the office apparatus planning/development/production part 3.

Thereby, using the usage condition information, the delivery/replacement/collection information, the maintenance service information, and the sales information of the office apparatuses 1₁ through 1_{N}, the accurate delivery, replacement, and collection of office apparatuses or their components can be performed, accurate maintenance service can be provided to the customers, office apparatuses matching the needs of the customers can be developed, and the efficient production and inventory control of office apparatuses can be realized.

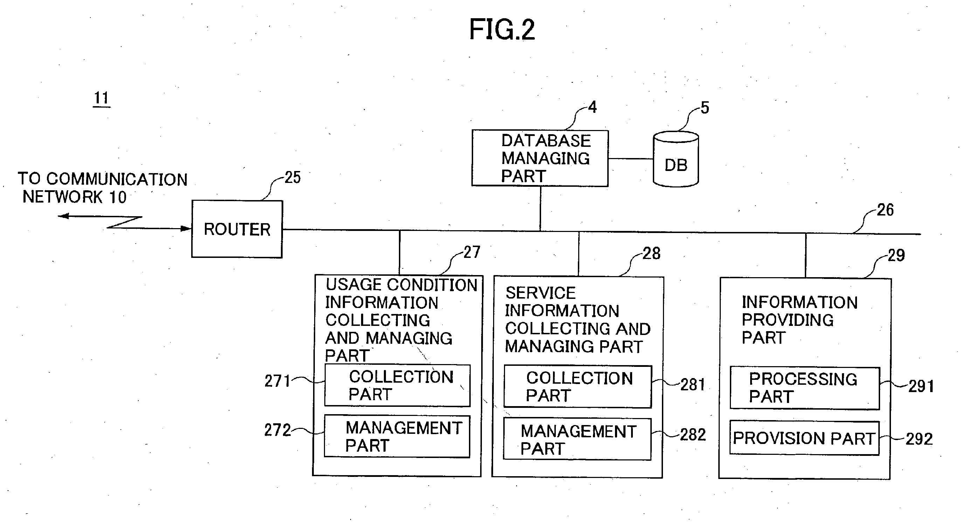

FIG. 2 is a block diagram showing the remote service center 11 according to the embodiment of the present invention. The remote service center 11 includes a database managing part 4, a database 5, a communication router 25, a bus 26, a usage condition information collecting and managing part 27, a service information collecting and managing part 28, and an information providing part 29.

The communication router 25 provides an interface between the communication network 10 and the bus 26 and has a routing function.

The usage condition information collecting and managing part 27 is a system for collecting, via the communication network 10, and managing the usage condition information that indicates the usage conditions of the office apparatuses 1₁ through 1_{N} used by the customers. The usage condition information collecting and managing part 27 includes a collection part 271 that collects the usage condition information periodically or whenever necessary and a management part 272 that manages the collected usage condition information.

The usage condition information includes the usage information, the supply information, and the quality information of the office apparatuses 1₁ through 1_{N}. The usage information includes, for instance, the ratio of usage by size, the ratio of usage by paper feed tray, the ratio of usage of duplex copy, the amount of usage by size, the amount of usage by paper feed tray, the amount of usage of duplex copy, and the transition of the monthly values of these ratios and amounts. The supply information includes the amount of consumables used and information on the shortage or replenishment of consumables. The quality information includes, for instance, failure information indicating failure and alarm information indicating a state not of failure but of need for maintenance. Further, the quality information also includes information of other categories. For instance, the quality information may include information on the number of serviceman calls (SCs) each transmitted when failure is detected by a self-diagnosis by the apparatus, the number of emergency auto-calls (CCs) each transmitted when five paper jams of the same tendency occur in a row, the number of alarm calls (ACs) each transmitted in a state not of failure but of need for maintenance, and the number of manual calls (MCs) each transmitted by panel operation by the customer (or a serviceperson) so as to report malfunction.

The collection part 271 of the usage condition information collecting and managing part 27 can acquire information on the office apparatuses 1₁ through 1_{N} used by the customers periodically or whenever necessary.

The service information collecting and managing part 28 includes a collection part 281 and a management part 282. The collection part 281 collects the service informations (information on the service provided to the customers by the service providing part 2) periodically or whenever necessary. The management part 282 manages the collected service information.

The service information collecting and managing part 28 collects, via the communication network 10, and manages the service information.

The information providing part 29 includes a processing part 291 and a provision part 292. The processing part 291 generates the office apparatus information (information on the office apparatuses 1₁ through 1_{N}) based on at least one of the usage condition information collected by the usage condition information collecting and managing part 27 and the service information collected by the service information collecting and managing part 28. The provision part 282 provides the collected information.

The information providing part 29 generates the office apparatus information on the office apparatuses 1₁ through 1_{N} based on at least one of the usage condition information collected by the usage condition information collecting and managing part 27 and the service information collected by the service information collecting and managing part 28, and provides the generated information via the communication network 10.

The database managing part 4 manages the database 5. The database 5 stores the usage condition information collected by the usage condition information collecting and managing part 27, the service information collected by the service information collecting and managing part 28, and the office apparatus information on the office apparatuses 1₁ through 1_{N} generated by the information providing part 29.

The office apparatus information provided by the information providing part 29 may include the following.

The information providing part 29, based on the usage condition information and the service information, provides the service providing part 2 with information on the necessity of replacing, collecting, or replenishing consumables or units or information on the necessity of maintenance.

For instance, the information providing part 29 predicts a period for replenishing consumables for the office apparatus 1 (any of the office apparatuses 1₁ through 1_{N}) of a customer based on the usage condition information, that is, the usage information and the supply information, of the office apparatus 1, and provides the generated information to the component distributing part 21 of the service providing part 2. The component distributing part 21 replenishes consumables for the office apparatus 1 based on the provided information. The information providing part 29 can predict a period for replenishing consumables with more accuracy by referring to information on the actual replenishment of consumables for the office apparatus 1 performed by the component distributing part 21 of the service providing part 2. This replenishment information is included in the service information. Further, the information providing part 29, based on the usage condition information and/or the service information, finds out problems concerning the office apparatus 1 of the customer and provides information on the problems to the service part 22 of the service providing part 2.

For instance, the information providing part 29 processes data on the office system of each customer and finds out its problems based on the usage condition information and/or the service information. For instance, the information providing part 29, based on the usage condition information of the office apparatus 1, processes information on the amount of usage, the usage by department, the usage by individual, or the apparatus and equipment cost of the office apparatuses 1, and provides information on a problem such as imbalance in apparatus usage or insufficient cost reduction. Receiving this information, the service part 22 of the service providing part 2 proposes an optimum office apparatus system to the customer, showing the result of a simulation on outsourcing, for instance.

Further, the information providing part 29, based on the usage condition information and/or the service information, provides the sales part 23 of the service providing part 2 with office apparatus information required by the customer. For instance, the information providing part 29 provides information on an office apparatus of performance suitable for the customer based on the usage information of the office apparatus 1 of the customer by function and by size. Receiving this information, the sales part 23 of the service providing part 2 makes a proposal to the customer for the purchase of an office apparatus. That is, if the sales part 23 is informed by the information providing part 29 that the customer consumes paper sheets of a specific size, the sales part 23 proposes the customer purchasing an office apparatus having a cassette for the specific size provided at the highest of the cassette positions. Likewise, if the customer often makes a plurality of copies of one original, the sales part 23 proposes an apparatus with a sorter to the customer. If the customer makes much use of paper sheets of a size different from those set in the cassettes, for instance, by manual paper feeding, the sales part 23 proposes the addition of an extra paper cassette to the customer.

If failure or alarm frequently occurs in the office apparatus 1, the sales part 23 proposes to the customer replacing the office apparatus 1 with a new one.

The information providing part 29, based on the usage condition information and/or the service information,-provides information on the usage and the quality of each of the office apparatuses 1₁ through 1_{N} to the office apparatus planning and development part 31.

For instance, the office apparatus planning and development part 31 deduces the cause of failure or alarm from information on the unit of the office apparatus 1 in which unit failure or alarm frequently occurs and from the state of the failure or alarm, and develops an office apparatus with reduced failure.

Further, the office apparatus planning and development part 31, based on the usage condition information, excludes a function less frequently used from the next model, or strengthens a function frequently used by a specific group of customers in the next model therefor.

The information providing part 29, based on the usage condition information and/or the service information, provides information on the number of consumables to be reserved for the office apparatus 1 to the manufacturing part 32 of the office apparatus planning/development/production part 3 or the component distributing part 21 of the service providing part 2.

For instance, the information providing part 29, based on the usage condition information and/or the service information, predicts the amount of consumables to be consumed in a predetermined period, and provides the prediction information to the manufacturing part 32 or the component distributing part 21. The manufacturing part 32 or the component distributing part 21 performs inventory control based on this prediction information.

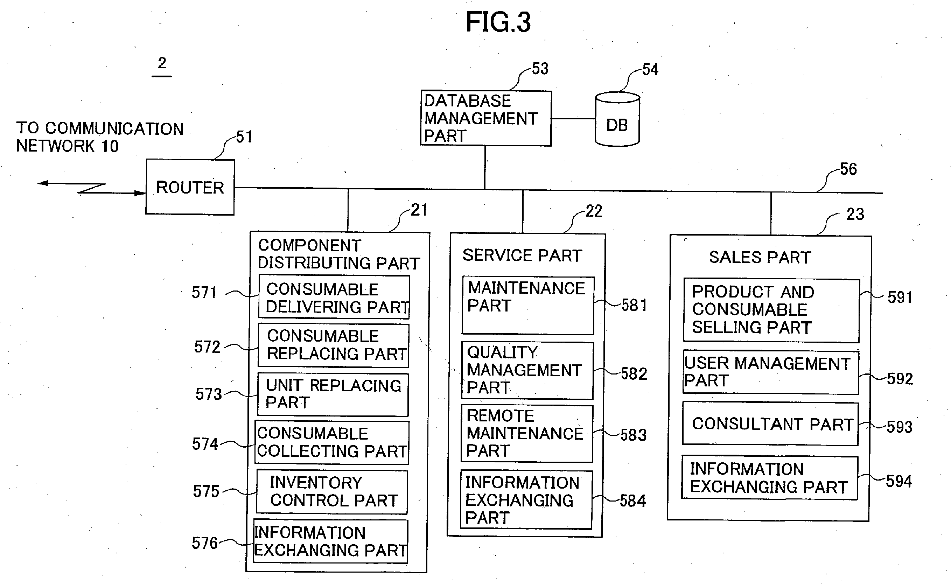

FIG. 3 is a block diagram showing a system configuration of the service providing part 2.

The service providing part 2 of FIG. 3 includes a communication router 51, a database managing part 53, a database 54, a bus 56, the component distributing part 21, the service part 22, and the sales part 23.

The communication router 51, which provides an interface between the network 10 and the bus 56, has a routing function. The database managing part 53 manages the database 54. The database 54 stores the information that the component distributing part 21, the service part 22, and the sales part 23 require in order to provide service to the customers.

The component distributing part 21 performs the delivery, replacement, and collection of consumables and the replacement of units for the customers of the office apparatuses 1₁ through 1_{N}. The component distributing part 21 includes a consumable delivering part 571 that delivers consumables for the office apparatuses 1₁ through 1_{N}, a consumable replacing part 572 that replaces consumables, a unit replacing part 573 that replaces the units of the office apparatuses 1₁ through 1_{N}, a consumable collecting part 574 that collects consumables, an inventory control part 575 that controls the stock of consumables and units, and an information exchanging part 576 that exchanges information with the remote service center 11.

The replacement of units means the replacement of defective units. As the performance of the office apparatuses 1₁ through 1_{N} becomes higher, it becomes difficult to repair a faulty-apparatus. Therefore, the office apparatuses 1₁ through 1_{N} are formed of units so that a faulty apparatus may be repaired by replacing a defective unit. The information exchanging part 576 receives from the remote service center 11 information on the replacement, collection, or replenishment of consumables or units, information on a period for replenishing consumables or units, and information used for the inventory control of consumables or units. On the other hand, the information exchange part 576 transmits, as required, to the remote service center 11, information on the delivery of consumables to the customers, information on the replacement of consumables and units for the customers, information on the collection of consumables, and information on the stock of consumables and units.

The service part 22 makes maintenance contracts with the customers of the office apparatuses 1₁ through 1_{N} so as to maintain and manage the office systems of the customers. The office apparatuses 1₁ through 1_{N} are maintained or repaired remotely via the communication network 10 due to the improvement of their performance. The service part 22 includes a maintenance part 581 that maintain the office apparatuses 1₁ through 1_{N}, a quality managing part 582 that manages the office apparatuses 1₁ through 1_{N} and their quality, a remote maintenance part 583 that remotely repairs failure in the office apparatuses 1₁ through 1_{N}, and an information exchanging part 584 that exchanges information with the remote service center 11. The information exchanging part 584 receives the problems of the systems of the customers from the remote service center 11, and transmits maintenance information, information on the service provided to the customers with respect to quality management, and remote maintenance information to the remote service center 11 as required.

The sales part 23 sells products and consumables to the customers of the office apparatuses 1₁ through 1_{N}, provides the customers with consulting on their office systems, and manages the office systems of the customers. The sales part 23 includes a product and consumable selling part 591 that sells office apparatuses and consumables therefor, a user management part 592 that manages the systems of the office apparatuses 1₁ through 1_{N} of the customers, a consultant part 593 that provides consulting on the office systems of the customers, and an information exchanging part 594 that exchanges information with the remote service center 11. The information exchanging part 594 receives from the remote service center 11 information on office apparatuses of performance suitable for the customers and information on the replacement of the office apparatuses 1₁ through 1_{N} with new ones. On the other hand, the information exchanging part 594 transmits information on the sale of products and consumables, information on system management performed for the customers, and information on consulting provided for the customers to the remote service center 11 as required.

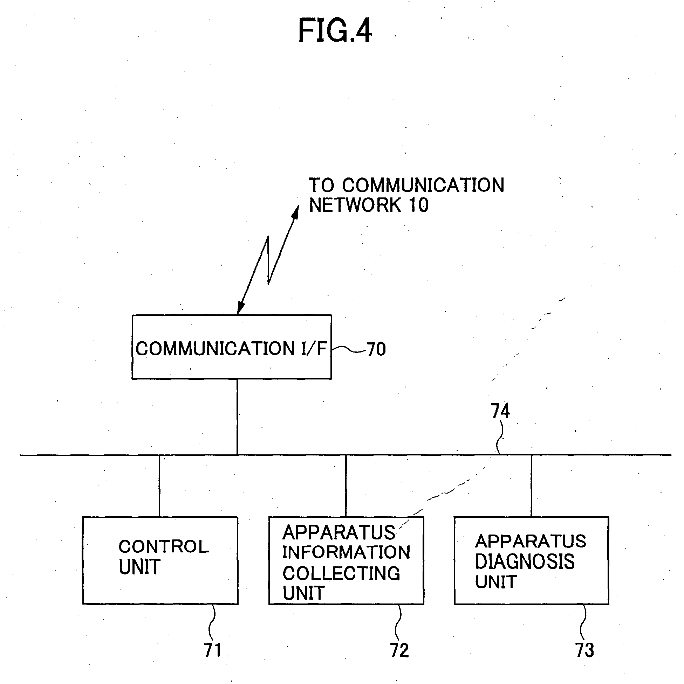

FIG. 4 is a block diagram showing the office apparatus 1 (any of the office apparatuses 1₁ through 1_{N} of the customers). The usage condition information showing the usage condition of the office apparatus 1 is transmitted therefrom to the remote service center 11.

The office apparatus 1 of the customer, which may be an apparatus such as a personal computer, a printer, a copier, a facsimile machine, or a scanner employed at home or in the office, includes a communication interface (I/F) 70, a control unit 71, an apparatus information collecting unit 72, an apparatus diagnosis unit 73, a bus 74, and an operation screen (not shown in the drawing) in its main body.

The control unit 71 controls the entire office apparatus 1. In addition to controlling the office apparatus 1 itself, the control unit 71 controls the communication I/F 70, the apparatus information collecting unit 72, the apparatus diagnosis unit 73, and the operation screen.

The apparatus information collecting unit 72 collects the usage information of the office apparatus 1, such as usage by size and usage by paper feed tray, the supply information on the supply of consumables for the office apparatus 1, and the quality information detected by the apparatus diagnosis unit 73, and stores the collected information in a storage part (not shown in the drawing). The apparatus information collecting unit 72 collects the usage condition information periodically or whenever necessary. When there is a request from the remote service center 11, the apparatus information collecting unit 72 also collects the usage condition information and transmits the collected information to the remote service center 11.

The apparatus diagnosis unit 73 performs self-diagnosis on the office apparatus 1. The apparatus diagnosis unit 73 transmits the result of the self-diagnosis to the remote service center 11 via the apparatus information collecting unit 72 and the communication I/F 70.

The apparatus diagnosis unit 73 performs self-diagnosis based on a variety of data on the office apparatus 1 collected by the apparatus information collecting unit 72. That is, the apparatus diagnosis unit 73 performs self-diagnosis as to whether or not the office apparatus 1 is in a state of failure or in a state riot of failure but of need for maintenance.

If the apparatus diagnosis unit 73 determines that the office apparatus 1 is in a state of failure or in a state not of failure but of need for maintenance, the determination result is automatically transmitted via the apparatus information collecting unit 72 to the remote service center 11 as the failure information or the alarm information.

This information is expressed in information codes and temporarily stored in the buffer (not shown in the drawing) of the apparatus information collecting unit 72. Thereafter, the information is transmitted to the remote service center 11 in a predetermined transmission format corresponding to the communication network 10 with code information being added to the information. Accordingly, the remote service center 11 can understand the contents of a failure, for instance, by referring to the code information.

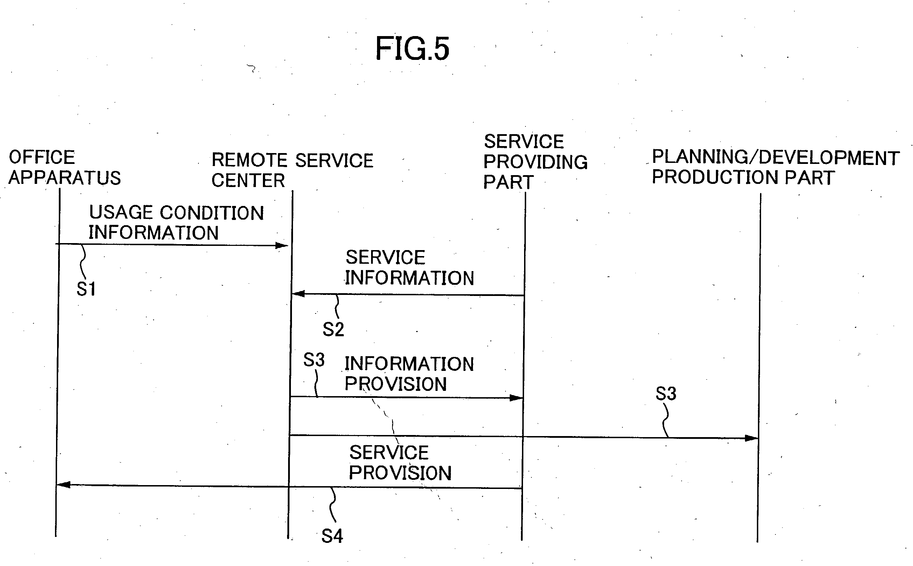

A description will be given, with reference to FIG. 5, of a sequence of operations for providing office apparatus information service according to the present invention.

In step S1 of FIG. 5, the office apparatus 1 transmits its usage condition information to the remote service center 11 whenever necessary or at the request of the remote service center 11. The usage condition information includes the usage information, the supply information, and the quality information of the office apparatus 1.

In step S2, the service providing part 2 transmits the service information of the office apparatus 1, such as the delivery/replacement/collection information, the maintenance service information, and the sales information, to the remote service center 11.

In step S3, the remote service center 11, based on at least one of the usage condition information and the service information, generates information on the office apparatus 1 and provides the generated information to the service providing part 2 and the office apparatus planning/development/production part 3.

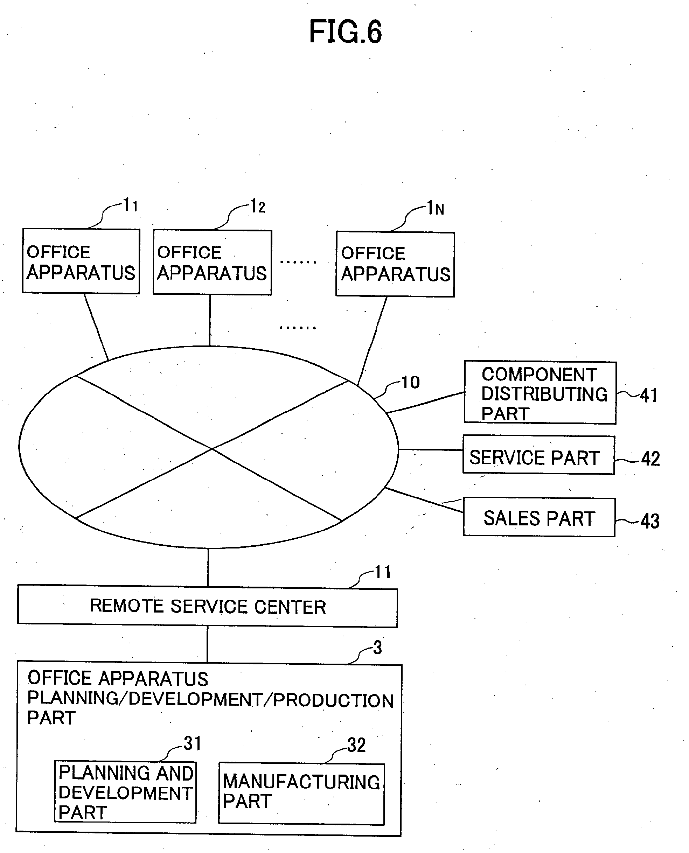

In step S4, the service providing part 2 provides service to the customer of the office apparatus 1 based on the information supplied from the remote service center 11. The component distributing part 21, the service part 22, and the sales part 23 of the service providing part 2 may be connected individually to the communication network 10 as shown in FIG. 6.

According to this embodiment, the remote service center 11 includes the usage condition information collecting and managing part 27, the service information collecting and managing part 28, and the information providing part 29, which, however, may be provided separately in different apparatuses.

Thus, according to the present invention, information contributing to the accurate production and the sales promotion of apparatuses and service to customers can be provided based on the information matching the actual usage of the apparatuses of the customers.

The present invention is not limited to the specifically disclosed embodiment, but variations and modifications may be made without departing from the scope of the present invention.

The present application is based on Japanese priority application No. 2002-141633 filed on May 16, 2002, the entire contents of which are hereby incorporated by reference.

## Claims

1. An information service system including:
an office apparatus provided to a customer; a service providing apparatus that provides service to the customer; and an information service apparatus that generates and provides information on the office apparatus, **characterized in that**:
the information service apparatus includes:
a usage condition information part that collects and manages usage condition information that shows a condition of usage of the office apparatus;
a service information part that collects and manages service information that shows the service provided to the customer by the service providing apparatus; and
an information providing part that generates and provides the information on the office apparatus based on at least one of the usage condition information and the service information.

2. The information service system as claimed in claim 1, further including a planning and development part that plans and develops the office apparatus and a manufacturing part that manufactures the office apparatus, **characterized in that** the information service apparatus provides the information generated by said information providing part to at least one of the service providing apparatus, said planning and development part, and said manufacturing part.

3. The information service system as claimed in claim 1 or 2, **characterized in that** the service providing apparatus includes at least one of a component distributing part that distributes components for the office apparatus, a service part that provides maintenance service to the office apparatus, and a sales part that performs a sales operation relating to the office apparatus.

4. The information service system as claimed in claim 3, **characterized in that** said component distributing part, said service part, and said sales part of the service providing apparatus are provided separately as independent units.

5. The information service system as claimed in any of claims 1 to 4, **characterized in that** the usage condition information includes information on usage of the office apparatus, information on a supply of consumables for the office apparatus, and information on quality of the office apparatus.

6. The information service system as claimed in claim 5, **characterized in that** the quality information includes failure information indicating a state of failure of the office apparatus and alarm information indicating a state of the office apparatus being in need of maintenance.

7. The information service system as claimed in any of claims 1 to 6, **characterized in that** the office apparatus, the service providing apparatus, and the information service apparatus are connected via a communication network so that the usage condition information and the service information are collected and the information on the office apparatus is provided electrically through the communication network.

8. An information service apparatus generating and providing information on an office apparatus provided to a customer, the information service apparatus **characterized by**:
a usage condition information part that collects and manages usage condition information that shows a condition of usage of the office apparatus;
a service information part that collects and manages service information that shows service provided to the customer by a service providing apparatus; and
an information providing part that generates and provides the information on the office apparatus based on at least one of the usage condition information and the service information.

9. The information service apparatus as claimed in claim 8, **characterized in that** said information providing part, based on at least one of the usage condition information and the service information, generates information on necessity of replacing or replenishing consumables for the office apparatus or necessity of maintaining the office apparatus, and provides the generated information to the service providing apparatus.

10. The information service apparatus as claimed in claim 8, **characterized in that** said information providing part, based on at least one of the usage condition information and the service information, generates information on purchase of an office apparatus by the customer and provides the generated information to the service providing apparatus.

11. The information service apparatus as claimed in claim 8, **characterized in that** said information providing part, based on at least one of the usage condition information and the service information, generates information on usage and quality of the office apparatus and provides the generated information to a planning and development apparatus that plans and develops the office apparatus.

12. The information service apparatus as claimed in claim 8, **characterized in that** said information providing part, based on at least one of the usage condition information and the service information, generates information on the number of consumables to be reserved for the office apparatus and provides the generated information to at least' one of a manufacturing apparatus that manufactures the office apparatus and the service providing apparatus.

13. The information service apparatus as claimed in claim 8, **characterized in that** said information providing part, based on at least one of the usage condition information and the service information, generates information on a problem of the office apparatus and provides the generated information to-the service providing apparatus.

14. The information service apparatus as claimed in any of claims 8 to 13, **characterized in that**:
said usage condition information part collects the usage condition information electrically via a network;
said service information part collects the service information electrically via the network; and
said information providing part provides the information on the office apparatus electrically via the network.

15. A method of generating and providing information on an office apparatus provided to a customer, **characterized by** the steps of:
(a) collecting usage condition information that shows a condition of usage of the office apparatus;
(b) collecting service information that shows service provided to the customer by a service providing apparatus; and
(c) generating and providing the information on the office apparatus based on at least one of the usage condition information and the service information.

16. The method as claimed in claim 15, **characterized in that** said step (c), based on at least one of the usage condition information and the service information, generates information on necessity of replacing or replenishing consumables for the office apparatus or necessity of maintaining the office apparatus, and provides the generated information to the service providing apparatus.

17. The method as claimed in claim 15, **characterized in that** said step (c), based on at least one of the usage condition information and the service information, generates information on purchase of an office apparatus by the customer and provides the generated information to the service providing apparatus.

18. The method as claimed in claim 15, **characterized in that** said step (c), based on at least one of the usage condition information and the service information, generates information on usage and quality of the office apparatus and provides the generated information to a planning and development apparatus that plans and develops the office apparatus.

19. The method as claimed in claim 15, **characterized in that** said step (c), based on at least one of the usage condition information and the service information, generates information on the number of consumables to be reserved for the office apparatus and provides the generated information to at least one of a manufacturing apparatus that manufactures the office apparatus and the service providing apparatus.

20. The method as claimed in claim 15, **characterized in that** said step (c), based on at least one of the usage condition information and the service information, generates information on a problem of the office apparatus and provides the generated information to the service providing apparatus.

21. The method as claimed in any of claims 15 to 20, **characterized in that**:
said step (a) collects the usage condition information electrically via a network;
said step (b) collects the service information electrically via the network; and
said step (c) provides the information on the office apparatus electrically via the network.

22. A program for causing a computer to execute a method of generating and providing information on an office apparatus provided to a customer, the method being **characterized by** the steps of:
(a) collecting usage condition information that shows a condition of usage of the office apparatus;
(b) collecting service information that shows service provided to the customer by a service providing apparatus; and
(c) generating and providing the information on the office apparatus based on at least one of the usage condition information and the service information.

23. The program as claimed in claim 22, **characterized in that** said step (c) , based on at least one of the usage condition information and the service information, generates information on necessity of replacing or replenishing consumables for the office apparatus or necessity of maintaining the office apparatus, and provides the generated information to the service providing apparatus.

24. The program as claimed in claim 22, **characterized in that** said step (c), based on at least one of the usage condition information and the service information, generates information on purchase of an office apparatus by the customer and provides the generated information to the service providing apparatus.

25. The program as claimed in claim 22, **characterized in that** said step (c), based on at least one of the usage condition information and -the service information, generates information on usage and quality of the office apparatus and provides the generated information to a planning and development apparatus that plans and develops the office apparatus.

26. The program as claimed in claim 22, **characterized in that** said step (c), based on at least one of the usage condition information and the service information, generates information on the number of consumables to be reserved for the office apparatus and provides the generated information to at least one of a manufacturing apparatus that manufactures the office apparatus and the service providing apparatus.

27. The program as claimed in claim 22, **characterized in that** said step (c), based on at least one of the usage condition information and the service information, generates information on a problem of the office apparatus and provides the generated information to the service providing apparatus.

28. The program as claimed in any of claims 22 to 27, **characterized in that**:
said step (a) collects the usage condition information electrically via a network;
said step (b) collects the service information electrically via the network; and
said step (c) provides the information on the office apparatus electrically via the network.

29. A computer-readable recording medium recording a program for causing a computer to execute a method of generating and providing information on an office apparatus provided to a customer, the method being **characterized by** the steps of:
(a) collecting usage condition information that shows a condition of usage of the office apparatus;
(b) collecting service information that shows service provided to the customer by a service providing apparatus; and
(c) generating and providing the information on the office apparatus based on at least one of the usage condition information and the service information.

30. The computer-readable recording medium as claimed in claim 29, **characterized in that** said step (c), based on at least one of the usage condition information and the service information, generates information on necessity of replacing or replenishing consumables for the office apparatus or necessity of maintaining the office apparatus, and provides the generated information to the service providing apparatus.

31. The computer-readable recording medium as claimed in claim 29, **characterized in that** said step (c), based on at least one of the usage condition information and the service information, generates information on purchase of an office apparatus by the customer and provides the generated information to the service providing apparatus.

32. The computer-readable recording medium as claimed in claim 29, **characterized in that** said step (c), based on at least one of the usage condition information and the service information, generates information on usage and quality of the office apparatus and provides the generated information to a planning and development apparatus that plans and develops the office apparatus.

33. The computer-readable recording medium as claimed in claim 29, **characterized in that** said step (c), based on at least one of the usage condition information and the service information, generates information on the number of consumables to be reserved for the office apparatus and provides the generated information to at least one of a manufacturing apparatus that manufactures the office apparatus and the service providing apparatus.

34. The computer-readable recording medium as claimed in claim 29, **characterized in that** said step (c), based on at least one of the usage condition information and the service information, generates information on a problem of the office apparatus and provides the generated information to the service providing apparatus.

35. The computer-readable recording medium as claimed in any of claims 29 to 34, **characterized in that**:
said step (a) collects the usage condition information electrically via a network;
said step (b) collects the service information electrically via the network; and
said step (c) provides the information on the office apparatus electrically via the network.
